# EUROPÄISCHE PATENTSCHRIFT

(11) **EP 0 571 354 B1**
(45) Veröffentlichungstag und Bekanntmachung des Hinweises auf die Patenterteilung: **09.07.1997**
(21) Anmeldenummer: 93890055.2
(22) Anmeldetag: 25.03.1993
(51) Int. Cl.: A47L 1/06, B60S 3/04

(54) **Scheibenreinigungsgerät**
Device for cleaning panes
Dispositif pour nettoyer des vitres

(30) Priorität: 22.05.1992 AT 1062/92
(43) Veröffentlichungstag der Anmeldung: 24.11.1993
(73) Patentinhaber: VEROPA DKFM. PETER VOGT K.G. Erzeugung von Kunststoffartikeln, 1031 Wien (AT)
(72) Erfinder: Vogt, Peter, A-1031 Wien (AT)
(74) Vertreter: Köhler-Pavlik, Johann, Dipl.-Ing.

(56) Entgegenhaltungen:
- DE-U- 8 913 651
- US-A- 4 067 107
- US-A- 5 099 540

## Beschreibung

Die Erfindung betrifft ein Scheibenreinigungsgerät nach dem Oberbegriff des Patentanspruches 1.

Die Erfindung bezweckt die Schaffung eines Reinigungsgerätes, mit welchem Wasser, Schnee und Eis von den Scheiben sowie dem Rückblickspiegel in einfacher Weise entfernt werden können.

Die zu diesem Zweck bekanntgewordenen Scheibenreinigungsgeräte haben den Nachteil, daß der im Verhältnis zu den Scheiben kleinflächige Rückblickspiegel durch die verhältnismäßig breiten Abstreifteile schwer zu reinigen ist.

Die US-PS 4.067.107 zeigt ein aus zwei Geräten bestehendes Reinigungsgerät, bei welchem das kleinere in eine Tasche des größeren einsetzbar ist. Bei diesem Reinigungsgerät ist das kleinere mit einem Griff versehen, welcher bei eingesetztem kleineren Reinigungsgerät aus dem größeren Reinigungsgerät hinausragt. Dieses Gerät ist für den erfindungsgemäßen Zweck unbrauchbar, da es platzaufwendig ist und nicht in einem Handschuhfach eines Kraftfahrzeuges untergebracht werden kann.

Aufgabe der Erfindung ist, den erwähnten Nachteil zu beseitigen.

Diese Aufgabe wird durch die Maßnahme nach dem kennzeichnenden Teil des Patentanspruches 1 gelöst.

Durch die Maßnahmen nach Anspruch 2 wird die Möglichkeit geboten, durch die beiden Löcher einen an beiden Enden mit einem Quersteg versehenen Kunststoffaden zu ziehen, der z.B. zum Anhängen von Werbeankündigungen dient und gleichzeitig einen Ladendiebstahl des kleineren Gerätes verhindert.

Weitere Vorteile der Erfindung werden durch die Maßnahmen nach den Ansprüchen 3 bis 9 erzielt.

Die Erfindung wird anhand der Zeichnung näher erläutert, in welcher ein Ausführungsbeispiel des Scheibenreinigungsgerätes dargestellt ist. Es zeigen
Fig. 1 eine Vorderansicht,
Fig. 2 eine Rückansicht des Scheibenreinigungsgerätes und
Fig. 3 einen Schnitt nach der Linie III-III der Fig. 1

Das erfindungsgemäße Scheibenreinigungsgerät besitzt einen länglichen, leicht nach oben gebogenen, Griff 1 mit nach innen geschwungenen Seitenwanden, um bequem gehalten zu werden. Der Griff 1 hat unterschiedlich breite Enden, wobei nahe dem breiteren Ende eine von der Oberfläche des Griffes 1 abstehende, aus Gummi, Kunststoff od. dgl. bestehende Abstreiflippe 2 in eine quer zum Griff 1 in diesem verlaufende Nut 17 eingesetzt ist. Mit dieser Lippe 2 wird Wasser von den Scheiben des Kraftfahrzeuges abgestreift. Das an die Lippe 2 anschließende breitere Ende des Griffes 1 kann zumindest teilweise angeschärft sein, um Schmutzteile, die an der Scheibe haften, entfernen zu können. An dem gegenüberliegenden schmäleren Ende des Griffes 1 ist ein aus Metall bestehender Abstreifer 3 in eine Nut 19 eingesetzt, mit welchem Eiskrusten entfernt werden können. Für den Fall, daß dicke Eiskrusten vorhanden sind, besitzt das Scheibenreinigungsgerät auf der bombierten Oberfläche des Griffes 1, im Bereiche des Abstreifers 3 eine Reihe von Schneidrippen 4, welche sich in der Längsrichtung des Griffes 1 erstrecken und mit welchen die Eiskrusten zerkleinert und teilweise beseitigt werden können.

Zur Reinigung des Rückblickspiegels ist ein kleineres Reinigungsgerät 5 vorgesehen, das mit einem zum Griff 1 im wesentlichen kongruenten Griff 6 versehen ist, welcher in eine Aussparung 7 des oberen, breiteren Teiles des Griffes 1 einsetzbar ist und mit seiner oberen Fläche 8 mit der oberen Fläche 9 des Griffes 1 bündig abschließt. Der Griff 6 ist mit einer Abstreiflippe 12 versehen, welche zwischen Führungen 13 des Griffes 6 gehalten ist und ähnlich wie die Abstreiflippe 2 von der bombierten Oberfläche des Griffes 6 nach außen absteht und mit der Abstreiflippe 2 parallel verlauft. Das breitere Ende des Griffes 6 ist zugeschärft und dient als Eisschaberkante 16. Selbstverständlich besteht die Möglichkeit, das Reinigungsgerät 5 auch anders auszubilden und z.B. mit Rippen, ähnlich den Schneidrippen 4, od. dgl. zu versehen.

Das breitere Ende der Griffe 1 und 6 ist mit einer Abschrägung 30, 30' versehen, wobei die beiden Abschrägungen 30, 30', falls der kleinere Abstreifer 6 in den größeren 1 eingesetzt ist, in einer Ebene liegen.

Um das Reinigungsgerät 5 aus dem Griff 1 hinauszudrücken, ist die Bodenwand 7' der Aussparung 7 des Griffes 1 im Bereiche des Reinigungsgerätes 5 mit einer vorzugsweise runden Durchbrechung 14 versehen, welche die Möglichkeit bietet, das Reinigungsgerät 5 mit einem Finger hinauszudrücken. Um dem Reinigungsgerät 5 im Griff 1 einen Halt zu geben, ist der Griff 6 auf seiner Bodenseite mit vorzugsweise ringsegmentförmigen Vorsprüngen 20 versehen, welche in die Durchbrechung 14 eingreifen und schnappverschlußartig wirken bzw. ausgebildet sind. Die Form der Durchbrechung 14 sowie der Vorsprünge 20 kann natürlich beliebig gewählt werden.

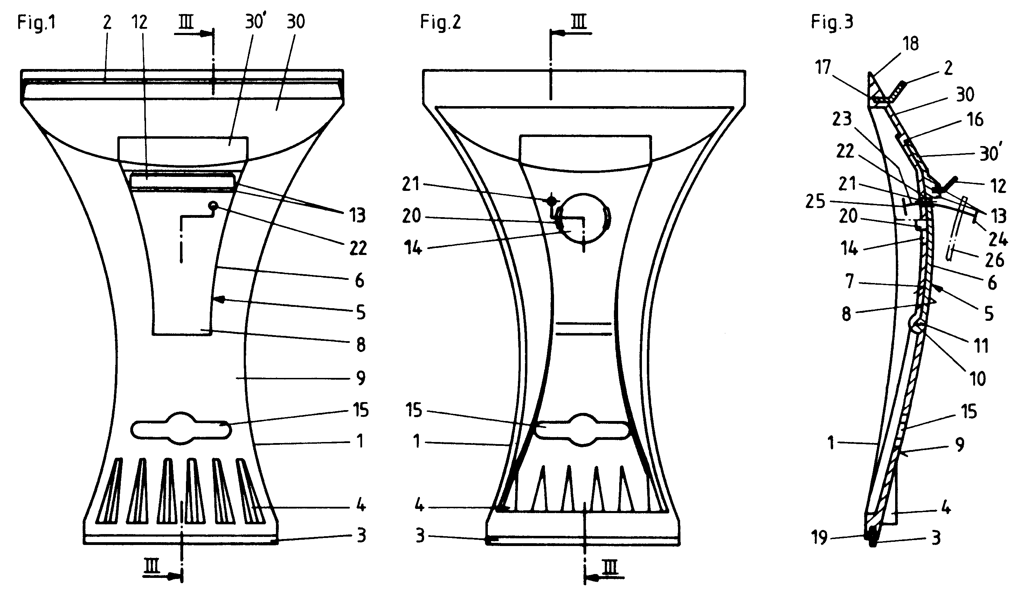

Um das Reinigungsgerät im Selbstbedienungsbereich von Geschäften griffbereit aufhängen zu können, ist der Griff 1 mit einer entsprechenden Ausnehmung 15 versehen. Zur Verhinderung eines Diebstahles des kleinen Reinigungsgerätes ist der Griff 6 desselben sowie der Boden der Aussparung 7 mit fluchtenden Löchern 21, 22 versehen, durch die, wie Fig. 3 zeigt, ein Kunststofffaden 23 mit endseitigen Stegen 24, 25 zum Tragen eines Werbeanhängers 26 durchgezogen werden kann, der gleichzeitig durch seine Stege 24, 25, deren Breite größer als der Durchmesser der Löcher 21, 22 sein muß, verhindert, daß der Griff 6 vom Griff 1 entfernt werden kann. Die berechtigte Befreiung des Griffes 6 vom Griff 1 kann durch Durchschneiden des Fadens 23 ermöglicht werden.

Selbstverständlich können im Rahmen der Erfindung verschiedene konstruktive Abänderungen vorgenommen werden. So können die Griffe 1 und 6 als beliebige Körper, z.B. als Platte, Halter od. dgl. ausgebildet sein. Schließlich besteht die Möglichkeit, das kleinere Reinigungsgerät für den Rückblickspiegel mit dem für die Scheiben bestimmten Reinigungsgerät auch in anderer Weise als beschrieben zu verbinden, z.B. in Form eines Anbring-, Aufsteck- oder Einschubteiles, welcher jedoch die Seitenränder des größeren Reinigungsgerätes nicht überragt.

## Patentansprüche

1. Scheibenreinigungsgerät, bestehend aus einer Kombination zweier miteinander lösbar verbundener, verschieden großer Scheibenreinigungsgeräte zum Entfernen von Wasser, Schnee und Eis von den Scheiben eines Kraftfahrzeuges, welche mit einem Griff (1 bzw. 6) versehen sind, dadurch gekennzeichnet, daß beide Scheibenreinigungsgeräte plattenförmig ausgebildet sind und das zur Reinigung eines Rückblickspiegels bestimmte kleinere Scheibenreinigungsgerät (5) in eine im wesentlichen kongruente Aussparung (7) auf der Oberfläche des größeren Scheibenreinigungsgerätes lösbar versenkt eingesetzt ist und mit einer Abstreiflippe (12) versehen ist.

2. Scheibenreinigungsgerät nach Anspruch 1, dadurch gekennzeichnet, daß der Griff (6) des kleineren Reinigungsgerätes (5) und der Boden der Aussparung (7) zum Einsetzen des kleineren Reinigungsgerätes (5) mit fluchtenden Löchern (21, 22) zum Durchziehen eines als zerstörbare Diebstahlsicherung ausgebildeten Kunststoffadens (23) zum Aufhängen von Werbeanhängern versehen sind.

3. Scheibenreinigungsgerät nach Anspruch 2, dadurch gekennzeichnet, daß das Loch (21) des größeren Scheibenreinigungsgerätes in einer Auflageplatte für das kleinere Reinigungsgerät (5) unterhalb des Loches (22) desselben angeordnet ist.

4. Scheibenreinigungsgerät nach Anspruch 1, dadurch gekennzeichnet, daß das kleinere Scheibenreinigungsgerät (5) kongruent zum größeren Scheibenreinigungsgerät ausgebildet ist.

5. Scheibenreinigungsgerät nach Anspruch 1, dadurch gekennzeichnet, daß die Aussparung (7) an einem Längsende mit einer Vertiefung (10) versehen ist, in welche die Platte des kleineren Reinigungsgerätes (5) mit einer Nase (11) einsetzbar ist.

6. Scheibenreinigungsgerät nach Anspruch 4, dadurch gekennzeichnet, daß die Platte des größeren Scheibenreinigungsgerätes im Bereiche des kleineren Scheibenreinigungsgerätes (5) mit einer Durchbrechung (14) versehen ist, durch welche das kleinere Reinigungsgerät (5) mit einem Finger hinausdrückbar ist, wobei das kleinere Scheibenreinigungsgerät (5) in die Durchbrechung (14) ragende als Schnappverschluß ausgebildete Vorsprünge (20) aufweist.

7. Scheibenreinigungsgerät nach Anspruch 6, dadurch gekennzeichnet, daß das kleinere Reinigungsgerät (5) im Bereiche der Durchbrechungen (14) in diese eingreifende als Schnappverschluß dienende Raster aufweist.

8. Scheibenreinigungsgerät nach Anspruch 1, dadurch gekennzeichnet, daß das kleinere Scheibenreinigungsgerät (5) mit einer Eisschabkante (16) versehen ist.

9. Scheibenreinigungsgerät nach Anspruch 1, dadurch gekennzeichnet, daß die obere Fläche des kleineren Scheibenreinigungsgerätes (5) nach dem Einsetzen desselben in das größere Scheibenreinigungsgerät bündig mit der Oberfläche (9) desselben abschließt.

## Claims

1. Pane cleaning apparatus comprising a combination of two detachably inter-connected pane cleaning devices of different sizes for removing water, snow and ice from the panes of a motor vehicle, which are provided with a handle (1 or 6), characterized in that both pane cleaning devices have a plate-like construction and the smaller pane cleaning device (5) intended for cleaning a rear-view mirror is placed in detachably flush manner in the substantially congruent recess (7) on the surface of the larger pane cleaning device and is provided with a stripping lip (12).

2. Pane cleaning apparatus according to claim 1, characterized in that the handle (6) of the smaller cleaning device (5) and the bottom of the recess (7) are provided for the insertion of the smaller cleaning device (5) with aligned holes (21, 22) for drawing through a plastic thread (23) constructed as a destructible antitheft device for hanging on advertisements.

3. Pane cleaning apparatus according to claim 2, characterized in that the hole (21) of the larger pane cleaning device is placed in a bearing plate for the smaller cleaning device (5) below the hole (22) thereof.

4. Pane cleaning apparatus according to claim 1, characterized in that the smaller pane cleaning device (5) is constructed congruently to the larger pane cleaning device.

5. Pane cleaning apparatus according to claim 1, characterized in that the recess (7) is provided on one longitudinal end with a depression (10), in which can be inserted the plate of the smaller cleaning device (5) with a nose (11).

6. Pane cleaning apparatus according to claim 4, characterized in that the plate of the larger pane cleaning device is provided in the vicinity of the smaller pane cleaning device (5) with an opening (14) through which it is possible to force with a finger the smaller cleaning device (5), the latter having projections (20) constructed as a snap hinge closure projecting into the opening (14).

7. Pane cleaning apparatus according to claim 6, characterized in that the smaller cleaning device (5) has, in the vicinity of the openings (14), members serving as snap hinge closures and which engage therein.

8. Pane cleaning apparatus according to claim 1, characterized in that the smaller pane cleaning device (5) is provided with an ice scraping edge (16).

9. Pane cleaning apparatus according to claim 1, characterized in that the upper surface of the smaller pane cleaning device (5), following the insertion thereof in the larger pane cleaning device, terminates flush with the surface (9) of the latter.

## Revendications

1. Appareil de nettoyage des vitres, se composant d'une combinaison de deux appareils de nettoyage des vitres, reliés entre eux de manière amovible, de dimensions différentes pour éliminer l'eau, la neige et la glace des vitres d'un véhicule automobile et munis d'une poignée (1 respectivement 6), caractérisé en ce que les deux appareils de nettoyage de vitres sont en forme de plaque et en ce que le plus petit appareil de nettoyage de vitre (5), destiné au nettoyage d'un rétroviseur, est enfoncé de manière amovible dans une cavité essentiellement congrue (7) pratiquée à la surface du plus grand appareil de nettoyage des vitres et est muni d'une raclette (12).

2. Appareil de nettoyage des vitres selon la revendication 1, caractérisé en ce que la poignée (6) du plus petit appareil de nettoyage des vitres (5) et le fond de la cavité (7), où est introduit le plus petit appareil de nettoyage des vitres (5), sont munis de trous alignés (21, 22) pour passer un fil de matière plastique (23) ayant une fonction d'antivol destructible et servant à accrocher des enseignes publicitaires.

3. Appareil de nettoyage des vitres selon la revendication 2, caractérisé en ce que le trou (21) du plus grand appareil de nettoyage des vitres est disposé dans une plaque d'appui servant au plus petit appareil de nettoyage (5) en dessous du trou (22) de ce dernier.

4. Appareil de nettoyage des vitres selon la revendication 1, caractérisé en ce que le plus petit appareil de nettoyage des vitres (5) est conçu de manière à être congru par rapport au plus grand appareil de nettoyage des vitres.

5. Appareil de nettoyage des vitres selon la revendication 1, caractérisé en ce que la cavité (7) est munie, à son extrémité longitudinale, d'un évidement (10) dans lequel la plaque du petit appareil de nettoyage des vitres (5) s'enclenche par un taquet (11).

6. Appareil de nettoyage des vitres selon la revendication 4, caractérisé en ce que la plaque du grand appareil de nettoyage des vitres est munie, dans la zone du petit appareil de nettoyage des vitres (5), d'une encoche (14), à travers laquelle le petit appareil de nettoyage des vitres (5) peut être passé à l'aide d'un doigt, le petit appareil de nettoyage des vitres (5) présentant des saillies (20), s'engageant dans l'encoche (14) et faisant office de fermeture à déclic.

7. Appareil de nettoyage des vitres selon la revendication 6, caractérisé en ce que le plus petit appareil de nettoyage des vitres (5) présente, dans la zone des encoches (14), des crans d'arrêt s'encliquetant dans ces derniers et faisant déclic.

8. Appareil de nettoyage des vitres selon la revendication 1, caractérisé en ce que le plus petit appareil de nettoyage des vitres (5) est muni d'un bord (16) pour gratter la glace.

9. Appareil de nettoyage des vitres selon la revendication 1, caractérisé en ce que la surface supérieure du plus petit appareil de nettoyage des vitres (5), après son insertion dans le grand appareil de nettoyage des vitres, est jointive avec la surface (9) de ce dernier.
